# EUROPEAN PATENT APPLICATION

(11) **EP 0 566 239 A2**
(43) Date of publication of application: **20.10.1993**
(21) Application number: 93301795.6
(22) Date of filing: 10.03.1993
(51) Int. Cl.: G01B 11/275

(54) **Alignment angle specification compensation in a wheel alignment based upon vehicle ride height**

(30) Priority: 14.04.1992 US 868556
(71) Applicant: Bear Automotive Service Equipment Company, New Berlin Wisconsin 53151-0880 (US)
(72) Inventor: Puetz, Peter A., Waukesha, Wisconsin 53188 (US); Kling, Michael J., Mequon, Wisonsin 53092 (US); Woolley, John J., Oconomowoc, Wisconsin 53066 (US)
(74) Representative: Heath, Peter William Murray

(57) **Abstract**

A wheel alignment system (18) measures alignment angles of the wheels of an automotive vehicle. Vehicle ride height measurements are provided to the alignment system. Alignment angle specifications are retrieved for the automotive vehicle. The alignment angle specifications are compensated based upon the vehicle ride height measurements and compensated alignment angles are determined. The compensated alignment angles are used to align the wheels of the automotive vehicle.

## Description

The present invention relates to a automotive vehicle wheel alignment system. In particular, the invention relates to compensation of alignment angle specifications based upon vehicle ride height.

Proper alignment of the wheels of an automotive vehicle is important for proper handling of the vehicle and proper tire wear. In addition, proper alignment of the wheels will decrease fuel consumption as well as increase vehicle safety. The wheel alignment parameters which are measured and/or adjusted in order to achieve proper wheel alignment are camber, caster, steering axis inclination (SAI) and toe.

Camber angle is the inclination of the wheel plane with respect to vertical. It is considered positive when the wheel leans outward at the top, and is considered negative when it leans inward. Any wheel of an automobile can have camber.

Caster angle is the angle in side elevation between the steering axis of a steerable wheel (typically one of the front wheels) with respect to vertical. It is considered positive when the steering axis is inclined rearward (in the upward direction) and negative when the steering axis is inclined forward.

Steering axis inclination (SAI) or king pin inclination is the angle in the front elevation between the steering axis and vertical.

The static toe angle of a wheel, at a specified wheel load or relative position of the wheel center with respect to the sprung mass, is the angle between a longitudinal axis of the vehicle and the line of intersection of the wheel plane and the road surface. The wheel is "toed-in" if the forward portion of the wheel is turned toward a central longitudinal axis of the vehicle, and "toed-out" if turned away.

Vehicle alignment angle specifications are dependent upon ride height of the vehicle. Front and rear camber, front and rear toe, caster and steering axis inclination can vary based upon the ride height of the vehicle. Ride height is defined as the distance between various points on the vehicle chassis and a plane which supports the wheels of the vehicle. This can also be measured between two points on the vehicle. To obtain proper vehicle alignment, a number of techniques are used to compensate for vehicle ride height. In one technique, the vehicle is set to a specified condition. In a second technique, ride height is measured by an operator. The operator adjusts the alignment angles according to a specification table provided by the automobile manufacturer.

Prior art techniques of alignment angle compensation based upon ride height are time-consuming and prone to inaccuracies. Thus, a technique of compensating for vehicle ride height that is less time-consuming and more accurate than prior art techniques is desired.

The wheel alignment measurement system of the present invention measures alignment angles of the wheels of an automotive vehicle and compensates for vehicle ride height.

In the present invention, ride height values for the vehicle are provided to the wheel alignment measurement system. Alignment angles for the vehicle are determined using the wheel alignment measurement system. The wheel alignment measurement system retrieves alignment specifications for the vehicle being tested. The alignment system changes the specified alignment angle based upon vehicle ride height to obtain compensated alignment angle specifications. Compensated alignment angle specifications are displayed relative to the measured alignment angles. An operator adjusts wheel alignment of the vehicle based upon the measured alignment angles and the compensated specified alignment angles.

The invention is described in detail in connection with the drawings in which:
Figure 1 shows head units mounted to wheels of an automotive vehicle.
Figure 2 illustrates ride height measurement for an automotive vehicle.
Figures 3A and 3B are a block diagram of a wheel alignment system in accordance with the present invention.
Figure 4 is a flow chart in accordance with the present invention.

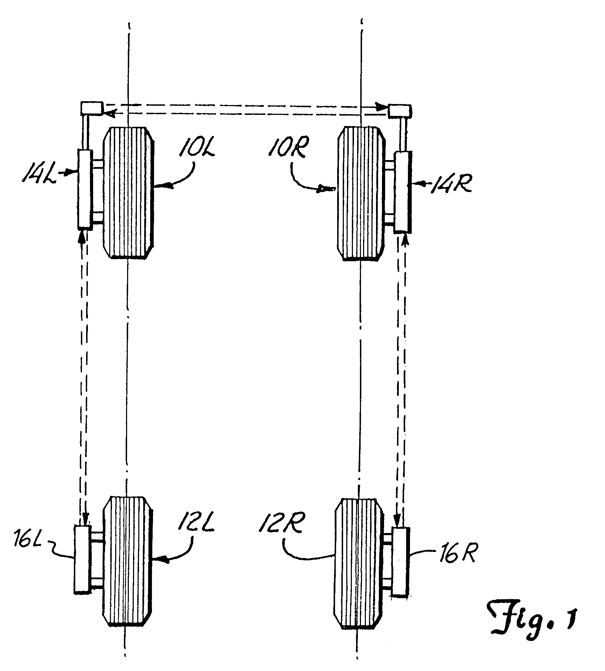

Figure 1 shows left front wheel 10L, right front wheel 10R, left rear wheel 12L, and right rear wheel 12R of the automotive vehicle. Front head unit 14L is mounted to left front wheel 10L. Right front head unit 14R is mounted on right front wheel 10R. Left rear head unit 16L is mounted to left rear wheel 12L and right rear head unit 16R is mounted to right rear wheel 12R.

Head units 14L, 14R, 16L, and 16R provide angle measurements for wheels 10L, 10R, 12L, and 12R of an automotive vehicle. Each head unit includes radiation emitters and sensors which form angle sensors. Radiation paths are indicated by dashed lines in Figure 1. The radiation emitters and sensors are used to detect relative angles between adjacent pairs of head units. U.S. Patent No. 4,594,789 entitled WHEEL ALIGNMENT SYSTEM by Marino et al describes such an alignment system and is incorporated herein by reference.

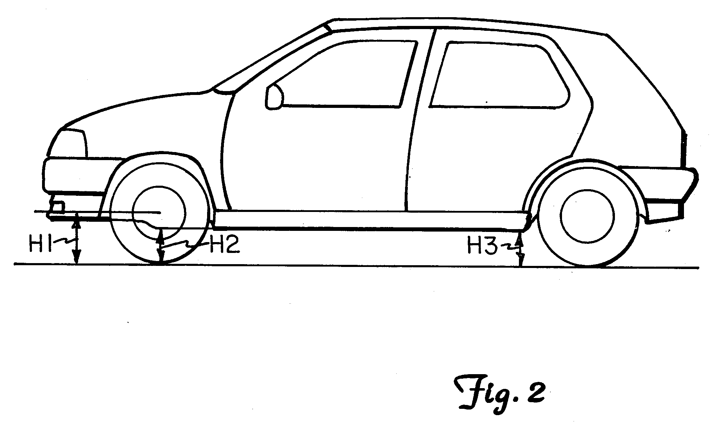

Figure 2 shows a side view of an automotive vehicle. In Figure 2, chassis heights H1, H2 and H3 are shown. Heights H1, H2 and H3 are examples of chassis heights used to determine vehicle ride height. Ride height of the vehicle can change camber (front and rear), toe (front and rear), caster and steering axis inclination measurements. An operator typically measures heights H1, H2 and H3. In the past, these heights were typically used by an operator in conjunction with a table provided by the automobile manufacturer which gave alignment angle specifications for various height measurements.

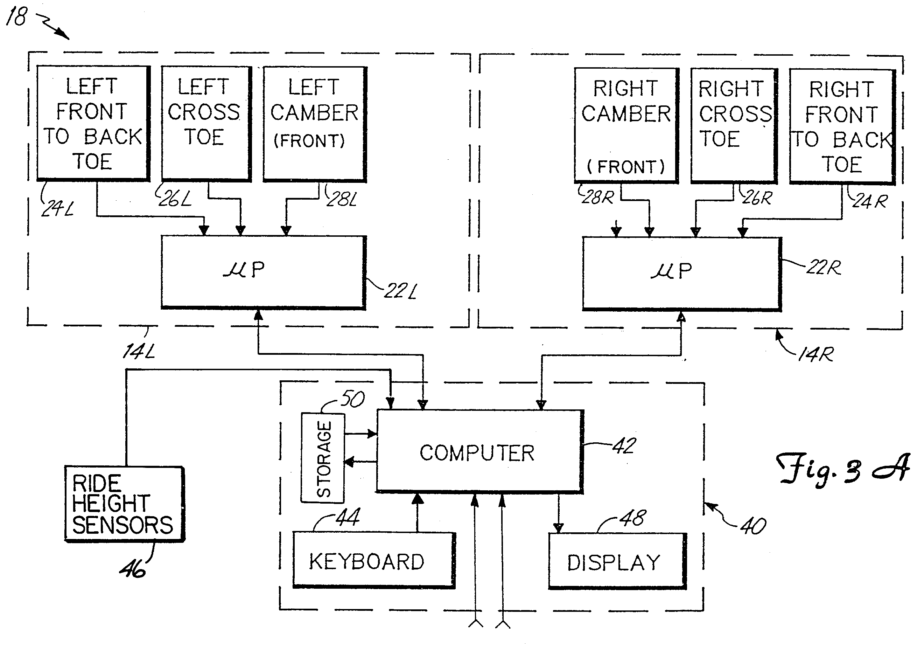

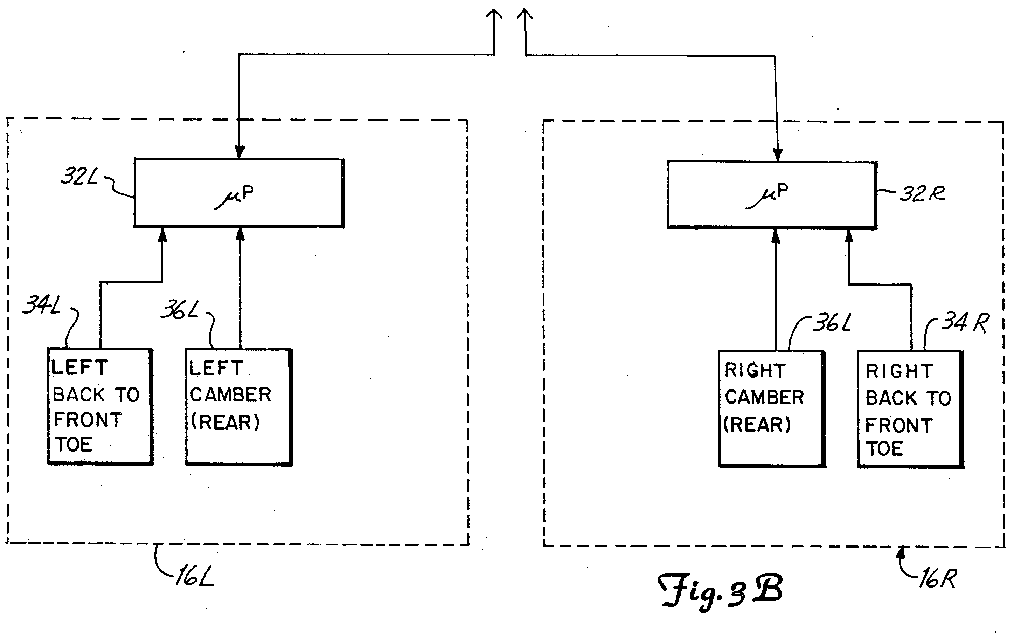

Figures 3A and 3B show a block diagram of a wheel alignment system 18 in accordance with the present invention. Wheel alignment system 18 includes front head units 14L and 14R and rear head units 16L and 16R. Left rear unit 14L includes microprocessor 22L, left front-to-back toe sensor 24L, left cross toe sensor 26L and left camber (front) sensor 28L. Sensors 24L, 26L and 28L are connected to microprocessor 22L. Right front head unit 14R includes microprocessor 22R, right front-to-back toe sensor 24R, right cross toe sensor 26R and right camber (front) sensor 28R. Sensors 24R, 26R and 28R are connected to microprocessor 22R.

Left rear head unit 16L includes microprocessor 32L, left back-to-front toe sensor 34L and left camber (rear) sensor 36L. Sensors 34L and 36L are coupled to microprocessor 32L. Right rear head unit 16R includes microprocessor 32R, right back-to-front toe sensor 34R and right camber (rear) sensor 36R. Sensors 34R, 36R, and 38R are coupled to microprocessor 32R.

Wheel alignment system 18 includes main console 40. Main console 40 houses computer 42, keyboard 44, ride height sensors 46, and display 48. A storage device 50 is connected to computer 42.

Computer 42 receives commands and input data from keyboard 44 and provides information and instructions to automotive service technicians through display 48. Ride height sensors 46 provide vehicle ride height measurements to computer 42. Sensors 46 can comprise any suitable distance sensors. Computer 42 also receives measurement data from microprocessors 22L, 22R, 32L, and 32R. Sensors 24L-28L, 24R-28R, 34L-36L, and 34R-36R provide digital output signals through an analog-to-digital converter (not shown). Microprocessors 22L, 22R, 32L, and 32R receive sensor signals from their associated sensors and process those signals as needed before sending the signals to computer 42 for further analysis.

Vehicle alignment angle specifications vary based upon vehicle ride height. The present invention provides an automotive vehicle wheel alignment system that compensates alignment angle specifications based upon ride height measurements. The relationship between ride height and alignment angle specifications can be expressed as an equation. This equation can be based upon specification tables for the vehicle provided by manufacturer. Once the relationship is known, the alignment system can calculate alignment angle specifications based upon ride measurements provided by an operator. Since an equation is used to compensate for vehicle ride height, the present invention provides a continuous output for different input values.

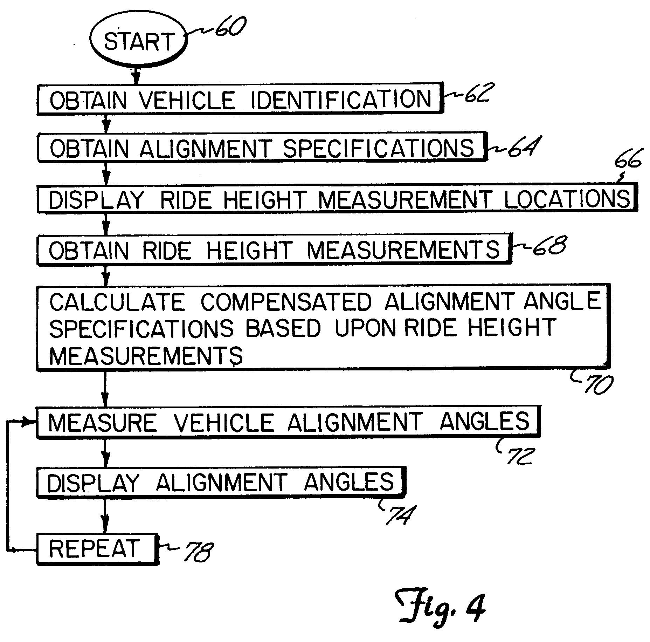

Figure 4 is a block diagram which shows steps of alignment angle compensation in accordance with the present invention. These steps are followed by computer 42 in alignment system 18. The process initiates at block 60 labeled START. At block 62, alignment system 18 obtains information which identifies the vehicle being tested. This information may be retrieved, for example, through keyboard 44 from an operator or from ride height sensors 42. Next, alignment specifications for the vehicle are retrieved at block 64 from storage 50 shown in Figure 3A. Control is passed to block 66 at which point ride height measurement locations are displayed on display 48. These are, for example, the locations shown in Figure 2 and are retrieved with the alignment specifications for the vehicle. This information is used by the operator to perform ride height measurements for the vehicle whose wheels are being aligned.

At block 68 shown in Figure 4, alignment system 18 obtains ride height measurements. These measurements may be input through keyboard 44 by the operator. At block 70, computer 42 calculates compensated alignment angle specifications for the vehicle being tested based upon ride height measurements which were obtained at block 68. This calculation is based upon formulas which were retrieved from storage 50 at block 64. These formula vary between vehicles and can be based upon a specification table provided by the manufacturer for the vehicle. At block 72, alignment system 18 measures alignment angles of the vehicle being tested. At block 74, these angles are displayed. Additionally, at block 74 a relationship between the measured alignment angles and the compensated alignment angle specifications are displayed for viewing by an operator. Based upon the display, the operator adjusts the alignment of the wheels of the vehicle under test to fall within a specified range. At block 78, control is returned to block 72 and the process is repeated until the wheels are in proper alignment.

Although the present invention has been described with reference to preferred embodiments, workers skilled in the art will recognize that changes may be made in form and detail without departing from the spirit and scope of the invention. For example, look up tables, rather than equations, can be used to determine the compensated alignment angle specifications.

## Claims

1. An automotive vehicle wheel alignment system for aligning wheels of an automotive vehicle, comprising:
head units adapted for mounting on the wheels of the automotive vehicle, the head units including angle sensors;
means for receiving an input identifying a make and model of the automotive vehicle;
means for measuring alignment angles of the automotive vehicle based upon outputs from the angle sensors;
means for retrieving alignment angle specifications for the automotive vehicle based upon the make and model of the automotive vehicle stored in the alignment system;
means for obtaining ride height values for the automotive vehicle related to a distance between a chassis of the vehicle and a point beneath the chassis contained within a plane parallel to the chassis;
means for compensating the alignment angle specifications based upon the ride height values and providing compensated alignment angle specifications; and
display means for displaying a relationship between the measured alignment angles and the compensated alignment angle specifications.

2. The automotive vehicle wheel alignment system of claim 1 wherein the means for obtaining ride height values comprises a keyboard for receiving ride height values from an operator.

3. The automotive vehicle wheel alignment system of claim 1 wherein the means for obtaining ride height values comprises a ride height sensor.

4. The automotive vehicle wheel alignment system of claim 1 wherein the means for compensating includes means for calculating based upon a formula retrieved by the means for retrieving.

5. The automotive vehicle wheel alignment system of claim 1 wherein the means for compensating includes means for calculating based upon look up tables retrieved by the means for retrieving.

6. The automotive vehicle wheel alignment system of claim 1 including ride height location display means for graphically displaying ride height locations on the chassis of the automotive vehicle from which ride height measurements are obtained.

7. A method for aligning wheels of an automotive vehicle using an automotive vehicle wheel alignment system, comprising:
mounting head units on the wheels of the automotive vehicle;
providing information relating to the make and model of the vehicle to the alignment system;
obtaining ride height values for the automotive vehicle;
providing the ride height values to the automotive vehicle wheel alignment system;
retrieving alignment angle specifications for the automotive vehicle stored in the alignment system;
changing the alignment angle specifications based upon the ride height measurements using the automotive vehicle wheel alignment system to obtain compensated alignment angles;
measuring alignment angles of the automotive vehicle using the alignment system to obtain measured alignment angles; and
adjusting alignment of the wheels of the vehicle based upon measured alignment angles and compensated alignment angles.

8. The method of claim 7 including displaying on display in the automotive vehicle wheel alignment system locations on a chassis of the automotive vehicle for obtain ride height measurements.

9. The method of claim 7 wherein obtaining ride height values comprises measuring ride height values and inputing ride height values into the automotive vehicle wheel alignment system by an operator.

10. The method of claim 7 wherein obtaining ride height values comprises measuring ride height values with a ride height sensor.
